# EUROPEAN PATENT APPLICATION

(11) **EP 4 589 287 A1**
(43) Date of publication of application: **23.07.2025**
(21) Application number: 24875633.0
(22) Date of filing: 31.10.2024
(51) Int. Cl.: G01N 21/88, G01N 3/56, D06H 3/08

(54) **EVALUATION METHOD AND EVALUATION DEVICE**

(30) Priority: 31.10.2023 JP 2023187049
(71) Applicant: Daikin Industries, Ltd., Osaka-shi, Osaka 530-0001 (JP)
(72) Inventor: HORIKAWA, Nozomi, Osaka-Shi, Osaka 5300001 (JP); YAMAGUCHI, Nozomi, Osaka-Shi, Osaka 5300001 (JP); FUKUMOTO, Kanako, Osaka-Shi, Osaka 5300001 (JP); TSUKADA, Hiroto, Osaka-Shi, Osaka 5300001 (JP); YAMAO, Norihito, Osaka-Shi, Osaka 5300001 (JP)
(74) Representative: Hoffmann Eitle
(86) International application number: PCT/JP2024/038930
(87) International publication number: WO 2025/095074

(57) **Abstract**

An evaluation method provides quantitative evaluation of chalk mark. The evaluation method evaluates a scratch on a surface of a substrate which is an evaluation target. The evaluation method comprises; acquiring an image of the surface of the substrate which is the evaluation target; extracting, from the image, each of a first range with the scratch and a second range with no scratch; computing a difference between a luminance value of the first range and a luminance value of the second range; and obtaining an evaluation result based on the difference.

## Description

### TECHNICAL FIELD

The present disclosure relates to an evaluation method and an evaluation apparatus for evaluating a surface of a substrate.

### BACKGROUND

An evaluation on a composition, etc., may include an evaluation on a surface of a substrate. For example, a method for evaluating a surface of a substrate may include creating a scratch on the substrate with a friction tester, and based on the scratch made on the surface of the substrate, evaluating the substrate (for example, see Patent Literature 1 or 2).

### Citation List

### Patent Literature

Patent Literature 1: JP 2023-33719 A
Patent Literature 2: JP 2021-195407 A

### SUMMARY

### TECHNICAL PROBLEM

In the evaluation method as mentioned above, it is a practice to make a visual evaluation and a quantitative evaluation of the surface of the substrate is not possible.

Accordingly, an object of the present disclosure is to provide a method and an apparatus which enable a quantitative evaluation of a surface of a substrate.

### SOLUTION TO PROBLEM

An evaluation method of the present disclosure evaluates a scratch on a surface of a substrate which is an evaluation target, the evaluation method including: acquiring an image of the surface of the substrate which is the evaluation target; extracting, from the image, each of a first range with the scratch and a second range with no scratch; computing a difference between a luminance value of the first range and a luminance value of the second range; and obtaining an evaluation result based on the difference.

In the evaluation method, before the acquiring of the image, the scratch may be made on the surface of the substrate which is the evaluation target with a friction tester by causing a stylus of the friction tester to reciprocate on the surface of the substrate.

In the evaluation method, for example, the substrate is a textile.

In the evaluation method, for example, the scratch is a chalk mark on the textile.

In the evaluation method, for example, the image is captured by an imaging apparatus in which an optical axis of an irradiation light from a light source irradiated on the substrate is set to the same axis as a photographing axis of a camera.

In the evaluation method, for example, the friction tester makes the scratch on the evaluation target in a range of a straight line having a width of 10 mm or less.

In the evaluation method, for example, a number of times of the reciprocation of the stylus is ten times or less.

In the evaluation method, for example, the friction tester makes the scratch at a predetermined position on the surface of the substrate which is the evaluation target by reciprocating the stylus with a predetermined load.

In the evaluation method, for example, the predetermined load is in a range of 100 g to 4000 g.

In the evaluation method, for example, the predetermined load is in a range of 1500 g to 4000 g.

An evaluation apparatus of the present disclosure including a computing circuit is for evaluating a scratch on a surface of a substrate which is an evaluation target, the evaluation apparatus acquiring an image of the surface of the substrate, wherein the computing circuit extracts, from the image, each of a first range with the scratch and a second range with no scratch, computes a difference between a luminance value of the first range and a luminance value of the second range, and outputs an evaluation result based on the difference.

These general and specific aspects may be carried out by a system, a method, a computer program, or a combination thereof.

### ADVANTAGEOUS EFFECT OF INVENTION

According to the evaluation method and the evaluation apparatus of the present disclosure, the surface of the substrate can be quantitatively evaluated.

### BRIEF DESCRIPTION OF THE DRAWINGS

Fig. 1 is a block diagram showing a configuration of an evaluation apparatus.
Fig. 2A is a conceptual diagram showing an evaluation target.
Fig. 2B is a conceptual diagram showing an example of an area of the evaluation target extracted from the evaluation target.
Fig. 2C is a conceptual diagram showing another example of the area of the evaluation target extracted from the evaluation target.
Fig. 3 is a conceptual diagram describing coaxial illumination, and it shows a coaxial illumination apparatus and an imaging apparatus altogether.
Fig. 4 is a data configuration diagram for describing data for evaluation.
Fig. 5 is a flow chart for describing a processing of an evaluation method.

### DETAILED DESCRIPTION OF THE EMBODIMENTS

Hereinafter, an evaluation method and an evaluation apparatus according to an embodiment will be described with reference to the drawings. The following describes the evaluation method and the evaluation apparatus using an example of evaluating a chalk mark of a textile. In addition, in the following descriptions, the same components are given the same reference signs and the description thereof is not repeated.

In the present disclosure, a "substrate" may be a textile, a leather, a wrapping paper, a nonwoven fabric, etc. Typically, the above-described substrate is a textile. The substrate which is the evaluation target is treated with a repellent.

The "repellent" refers to a material with which a substrate, typically a surface of the substrate, is treated for the purposes of water repellency, oil repellency, etc.

The "chalk mark" refers to a line generated on the surface of the substrate due to rubbing with other objects, etc. The chalk mark is utilized for quality evaluation of the substrate.

### <<Evaluation target and friction tester>>

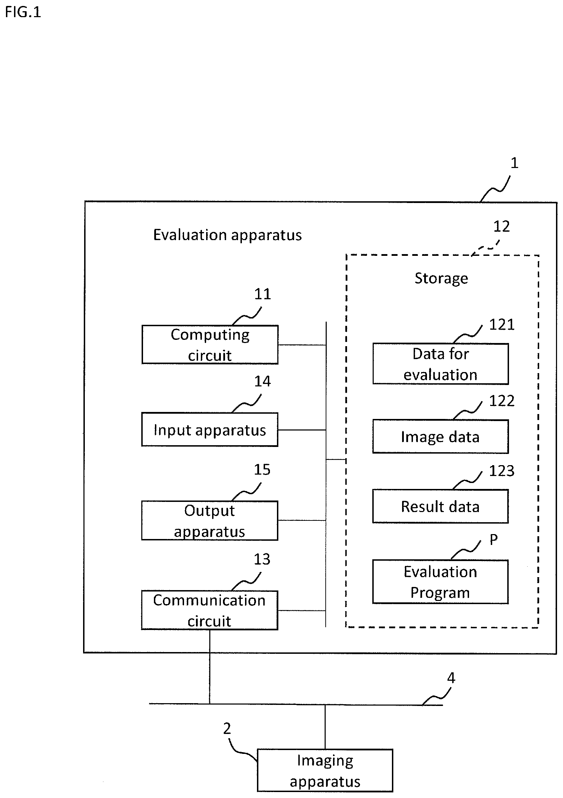

As mentioned above, the present disclosure describes an example of using a processed textile treated with the repellent as the substrate which is the evaluation target. In addition, an evaluation apparatus 1, which will be described later using Fig. 1, conducts evaluation by utilizing the chalk mark made on the textile. The chalk mark on the textile, which is the evaluation target, is processed using a common friction tester as will be described later.

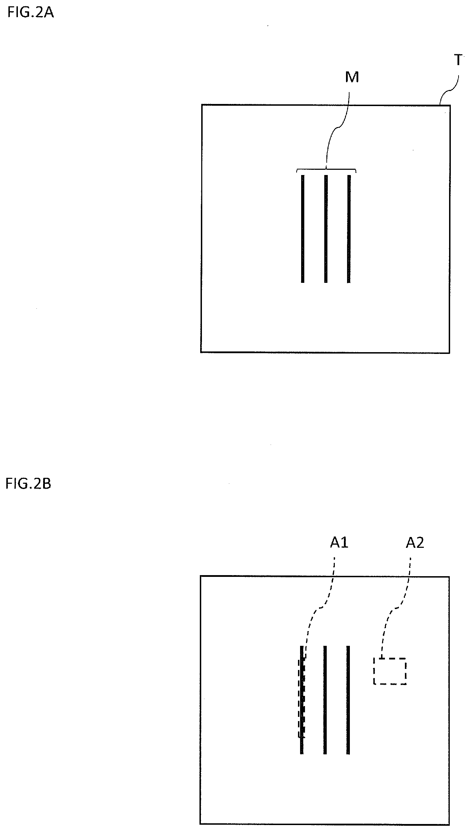

Fig. 2A is an example in which three chalk marks M are made near the center of a textile T. The three chalk marks M have predefined intervals, and are at fixed positions. In this manner, as illustrated in Fig. 2B, a first range A1 with a chalk mark and a second range A2 with no chalk mark can be correctly extracted and utilized for evaluation.

In this regard, the first range A1 includes only a scratched portion, and does not include unscathed portions with no scratch. That is to say, the first range A1 includes only a chalk mark portion. Note that, in Fig. 2B, portions with no chalk mark are also surrounded with a broken line in the first range A1 for easier understanding of the drawings. In addition, the second range A2 includes only a portion with no scratch, and does not include a scratched portion. That is to say, the second range A2 includes only a portion with no chalk mark.

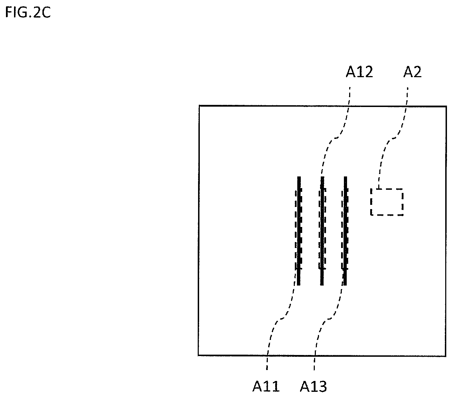

As illustrated in Fig. 2B, the shapes and the sizes of the first range A1 and the second range may be different. In addition, although not illustrated, in some embodiments, the shapes and the sizes of the first range A1 and the second range are the same. Moreover, for example, when a plurality of chalk marks are made, as illustrated in Fig. 2C, a plurality of first ranges All to A13 may be set. Note that, although three chalk marks are made in the examples shown in Figs. 2A and 2B, the numbers of the chalk marks and how the chalk marks are made are not limited.

Since the positions and the sizes of the first range A1 and the second range are predetermined, at the timing of each evaluation, the information on the first range A1 and the second range A2 can be utilized without requiring a user to select a range from an image.

### <<Friction tester>>

In the present disclosure, a friction tester can make a chalk mark on a textile treated with a repellent by linearly moving a stylus on the textile. The friction tester makes a chalk mark at a predetermined position in a target textile. At this time, a textile of a predetermined size may be set as the target. In addition, the friction tester can make a chalk mark at a predetermined position in the textile of the predetermined size.

The friction tester makes a chalk mark on the textile in a range of, for example, a straight line having a width of 10 mm or less. More specifically, the friction tester makes a chalk mark on the textile in a range of a straight line having a width of 5 mm or less. If the width is thick, its thickness will be greatly different from that of a common chalk mark generated on a textile. Accordingly, the friction tester makes a chalk mark of 10 mm or less, preferably 5 mm or less.

For example, when moving the stylus on the textile, the friction tester may reciprocate the stylus. At this time, the friction tester preferably makes a chalk mark with ten times or less reciprocation of the stylus. For example, the number of times of reciprocation of the stylus in the friction tester may be three times or more and less than five times. In addition, for example, the number of times of reciprocation of the stylus in the friction tester may be two times or more and less than three times. Furthermore, the number of times of reciprocation of the stylus in the friction tester may be less than two times. Moreover, the number of times of reciprocation of the stylus in the friction tester may be less than one time. The friction tester further preferably makes a chalk mark with a single one-way movement of the stylus. A plurality of times of movements of the stylus on the textile may cause thickening the chalk mark. In addition, a plurality of times of movements of the stylus on the textile may cause processing several sets of a plurality of lines of chalk marks.

For example, the friction tester imparts a predetermined load on the stylus, and causes the stylus to linearly move on the textile. In this manner, it is possible to prevent variations when evaluating a plurality of targets.

Specifically, the predetermined load may be a load in a range from 100 to 4000 g. More specifically, the predetermined load may be a load of 1500 to 4000 g. The reason for this is that a large load may cause the width to be thicker than that of a common chalk mark generated on a textile. In addition, a small load may cause the chalk mark to be paler than a common chalk mark generated on a textile, resulting in failure of a quantitative evaluation.

The friction tester makes a chalk mark with the stylus at a predetermined position in the textile. For example, the friction tester makes a chalk mark having a length of 30 mm on a center line of a textile of 100 m × 100 m. In addition, the friction tester makes chalk marks each in parallel with that chalk at a position 10 mm away from that chalk mark.

In this manner, making a chalk mark on a textile which is an evaluation target under a predetermined condition using the friction tester can reduce variations in chalk marks given to the evaluation target. Accordingly, variations in evaluation results can also be reduced.

Note that the friction tester is also referred to as an abrasion tester or a friction/abrasion tester.

### <<Coaxial illumination>>

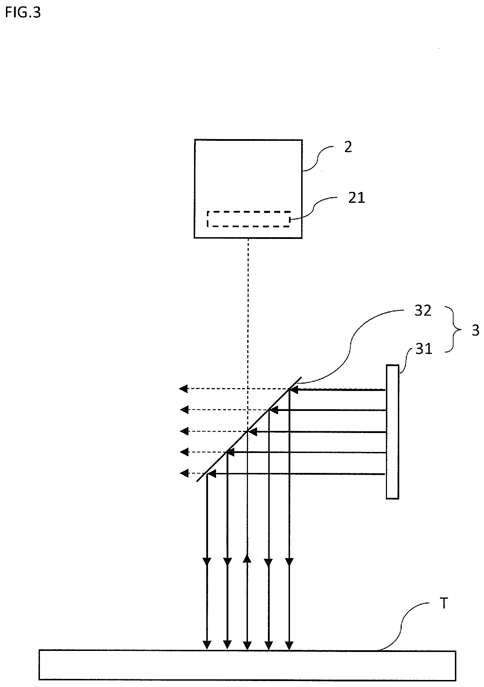

Next, illumination when acquiring image data to be used in the evaluation apparatus will be described. The evaluation apparatus 1 (described later) illustrated in Fig. 1 uses image data of a surface of a substrate captured by an imaging apparatus 2. In this regard, the imaging apparatus 2 preferably utilizes coaxial illumination for capturing an image of the surface of the substrate. In the coaxial illumination, light is irradiated on the same axis as a photographing axis (camera axis) of the imaging apparatus, and as one example illustrated in Fig. 3, an irradiation light from a light source 31 may be incorporated inside an optical path of a lens 21 of the imaging apparatus 2. Specifically, as illustrated in Fig. 3, in the coaxial illumination, a light from the light source 31 is reflected by a half mirror 32 and is irradiated on the evaluation target. In the present disclosure, as described above, the evaluation target is a textile T processed with a repellent. A configuration including the light source 31 and the half mirror 32 used for this coaxial illumination herein will be referred to as a coaxial illumination apparatus 3.

### <Evaluation apparatus>

Subsequently, with reference to Fig. 1, the evaluation apparatus 1 according to an embodiment will be described. The evaluation apparatus 1 including a computing circuit is for evaluating a scratch on a surface of a substrate which is an evaluation target, the evaluation apparatus acquiring an image of the surface of the substrate, wherein the computing circuit 11 extracts, from the image, each of a first range A1 with the scratch and a second range A2 with no scratch, computes a difference between a luminance value of the first range A1 and a luminance value of the second range A2, and outputs an evaluation result based on the difference.

The evaluation apparatus 1 is an information processing apparatus including the computing circuit 11, a storage 12, and a communication circuit 13. The computing circuit 11 is a controller which controls the entire evaluation apparatus 1. For example, the computing circuit 11 carries out various processes related to evaluations by reading out and executing an evaluation program P stored on the storage 12. In addition, the computing circuit 11 may carry out a predetermined function by cooperation of hardware and software, or may be a hardware circuit dedicatedly designed to carry out a predetermined function. For example, the computing circuit 11 can be carried out by CPU, MPU, GPU, FPGA, DSP, ASIC, etc.

The communication circuit 13 is an interface circuit (module) which enables data communication with an external apparatus through a network 4. For example, the communication circuit 13 may execute data communication with the imaging apparatus 2 which captures image data. Moreover, the communication circuit 13 may execute data communication with another external apparatus.

The evaluation apparatus 1 can include an input apparatus 14 and an output apparatus 15. The input apparatus 14 may be an operation button, a mouse, a keyboard, etc., utilized for input of an operation signal and data. The output apparatus 15 may be a display, etc., utilized for output or the like of processing results and data.

The storage 12 is a recording medium which records various kinds of information. The storage 12 is carried out by, for example, RAM, ROM, flash memory, Solid State Drive (SSD), hard disk, other storage devices, or an appropriate combination thereof. The storage 12 stores various data, etc., besides the evaluation program P carried out by the computing circuit 11. For example, the storage 12 stores data for evaluation 121, image data 122, result data 123, and the evaluation program P.

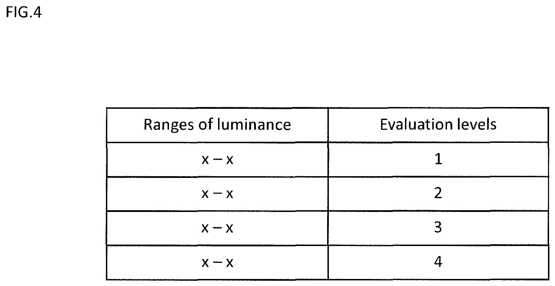

The data for evaluation 121 is data utilized for evaluation of the textile. For example, as one example illustrated in Fig. 4, the data for evaluation 121 associates a plurality of evaluation levels with ranges of luminance corresponding to each evaluation level. In this regard, since the data for evaluation 121 differs depending on the condition of the substrate, etc., the data for evaluation 121 is preferably generated per condition of the substrate, etc.

The image data 122 is image data obtained by capturing an image of the textile which is the evaluation target. For example, the image data may be a monochromatic image (a gray image of 8 bit). The use of the monochromatic image facilitates comparison between the luminance value of the first range A1 and the luminance value of the second range A2, which will be described later.

The result data 123 is data representing an evaluation result of the textile obtained from the image data 122.

The computing circuit 11 acquires the image data 122 from the imaging apparatus 2. The image data 122 is an image obtained by capturing an image of the surface of the textile which is the evaluation target. A chalk mark is made on the surface of the textile.

The computing circuit 11 extracts, from the image data 122, each of the first range A1 with a chalk mark and the second range A2 with no chalk mark. As described above using Fig. 2B, the textile T which is the evaluation target has a fixed size. In addition, a chalk mark M made on the surface of the textile T has a fixed position. Accordingly, the position of the first range A1 and the position of the second range A2 can be specified based on the size and the position.

The computing circuit 11 computes the luminance of the first range A1 as a first luminance value. In addition, the computing circuit 11 computes the luminance of the second range A2 as a second luminance value. Specifically, the computing circuit 11 obtains an average value of a luminance value of each pixel in the first range A1 as the first luminance value. Moreover, the computing circuit 11 obtains an average value of a luminance value of each pixel in the second range A2 as the second luminance value.

The computing circuit 11 obtains a difference between the first luminance value and the second luminance value.

Note that, as illustrated in Fig. 2C, when the plurality of first ranges A11 to A13 are set, for example, the computing circuit 11 firstly obtains the difference with the second range A2 per first range A11 to A13. The computing circuit 11 can use the average of the obtained plurality of differences A11 to A13 as the difference between the first luminance value and the second luminance value.

The computing circuit 11 regards an evaluation level corresponding to the range in which the obtained difference is included in the data for evaluation 121 as the evaluation result. Moreover, the computing circuit 11 outputs the decided evaluation result to the output apparatus 15.

In this regard, the evaluation apparatus 1 may be carried out by one computer, or may be carried out by a combination of a plurality of computers connected through a network. Moreover, although illustrations are omitted, for example, all or some of data stored on the storage 12 may be stored on an external recording medium connected through a network, and the evaluation apparatus 1 may be configured so as to use the data stored on the external recording medium.

### <Evaluation method>

An evaluation method according to an embodiment evaluates a scratch on a surface of a substrate which is an evaluation target, the evaluation method including
acquiring an image of the surface of the substrate which is the evaluation target,
extracting, from the image, each of a first range with the scratch and a second range with no scratch,
computing a difference between a luminance value of the first range and a luminance value of the second range, and
obtaining an evaluation result based on the difference.

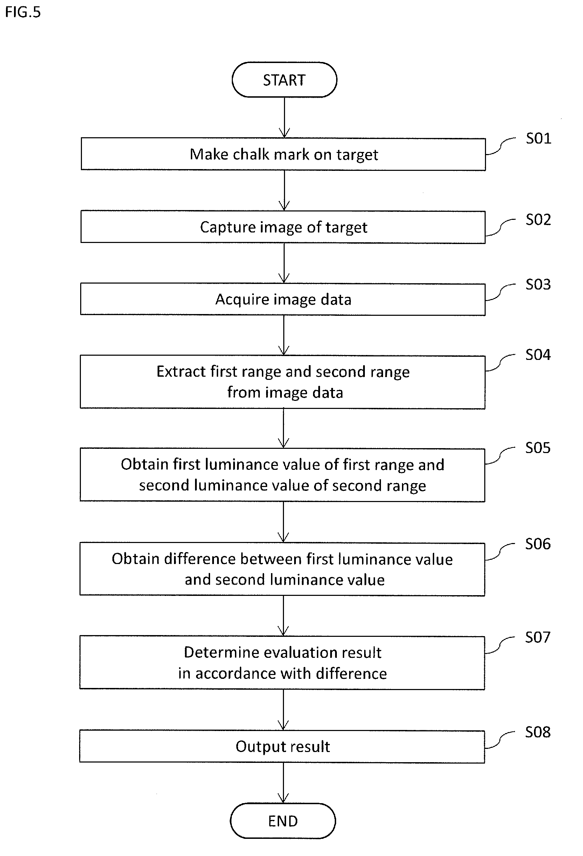

Hereinafter, the evaluation method using the evaluation apparatus 1 will be described with reference to the flow chart illustrated in Fig. 5. Note that the flow chart illustrated in Fig. 5 includes a step of making a chalk mark on a textile using a friction tester and a step of capturing an image of the textile before the series of steps of an evaluation executed by the evaluation apparatus 1.

Firstly, before the evaluation, a chalk mark is made on a textile which is an evaluation target using a friction tester (S01). The chalk mark is made under a predetermined condition.

Subsequently, the imaging apparatus 2 captures an image of the textile on which the chalk mark is made in step S01 (S02).

Once the chalk mark is made in step S01, and the imagecapturing is performed in step S02, the series of processes related to the evaluation are executed utilizing the evaluation apparatus 1.

The computing circuit 11 acquires the image data 122 captured by the imaging apparatus 2 in step S02 (S03). The computing circuit 11 causes the storage 12 to store the image data 122.

The computing circuit 11 extracts, from the image data 122 acquired in step S03, the first range A1 with the chalk mark and the second range with no chalk mark (S04). With the positions and each size of the first range A1 and the second range in the textile being predetermined, it is possible for the computing circuit 11 to utilize the information on the first range A1 and the second range A2 without requiring a user operation from an image.

The computing circuit 11 obtains, from the first range A1 and the second range A2 extracted in step S04, a first luminance value and a second luminance value, respectively (S05). Specifically, the computing circuit 11 obtains an average of luminance values of each pixel in the first range A1 as the first luminance value. In addition, the computing circuit 11 obtains an average of luminance values of each pixel in the second range A2 as the second luminance value.

The computing circuit 11 obtains a difference between the first luminance value and the second luminance value obtained in step S05 (S06). For example, in the case of a light colored fabric, a conventional evaluation which utilizes color change is difficult to make a distinction in a color image. In contrast, utilization of the evaluation with luminance values allows evaluation without being affected by colors. Accordingly, utilization of a monochromatic image for the image data 122 facilitates distinction of the difference between the first luminance value and the second luminance value.

The computing circuit 11 refers to the data for evaluation 121 stored on the storage 12, and determines an evaluation result in accordance with the difference obtained in step S06 (S07).

The computing circuit 11 outputs the evaluation result determined in step S07 (S08). For example, the computing circuit 11 may output the evaluation result to the output apparatus 15. In addition, for example, the computing circuit 11 may output the evaluation result to an external apparatus connected through the communication circuit 13.

In this manner, the evaluation method and the evaluation apparatus according to the present disclosure evaluate the target using luminance of chalk marks. Accordingly, the chalk marks can be quantitatively evaluated by utilizing predetermined correspondences between the luminance and evaluation levels.

### <Experimental example>

For example, a fabric processed with a repellent is used as the evaluation target. The processed fabric is nylon, polyester, or a spandex fabric (spandex is used as necessary). The size of the processed fabric is 100 mm × 100 mm. Conditions and results of the experiment will be shown in Table 2.1 to Table 5.

Experimental examples 1 to 13 are examples of making a chalk mark with a friction tester. Table 2-1 shows an experimental result in the case of a repellent A. Table 2-2 shows experimental results in the cases of a repellent B and a repellent C. Table 2-3 shows experimental results in the cases of a repellent D and a repellent E.

A commonly used friction tester (product name: Friction Player FPR2200, manufactured by RHESCA CO., LTD.) was used as the friction tester. With the friction tester, a columnar probe (diameter of 5 mm) was pushed against a surface of the above-described processed fabric and the surface was rubbed once. The load of friction was 3000 g. The movement speed of the probe was 30 mm/s, and the movement distance was 30 mm. The friction tester conducted rubbing on one sheet of the processed fabric at three points with an interval of 10 mm under the same conditions. In the following tables, a first chalk mark is denoted by n1, a second chalk mark is denoted by n2, and a third chalk mark is denoted by n3.

Evaluation levels, which are the results of the experimental example, are obtained using luminance of each chalk mark. Specifically, the evaluation levels are obtained using the above-mentioned data for evaluation 121 using Fig. 4. The data for evaluation 121 used for the evaluation levels in the experimental results is shown in Table 1.

**[Table 1]**

| Range of luminance | Evaluation level |
|---|---|
| ~1.9 | 5 |
| 2.0~3.4 | 4.5 |
| 3.5~4.9 | 4 |
| 5.0~6.4 | 3.5 |
| 6.5~8.4 | 3 |
| 8.5~9.9 | 2.5 |
| 10.0~12.9 | 2 |
| 13.0~15.9 | 1.5 |
| 16.0~ | 1 |

In addition, visual evaluations on the chalk marks are shown with the following values of 1 to 5. Moreover, intermediate values (for example, 2-3, 3-4, 4-5 and the like) are used depending on the state.
5: a trace is not seen
4: a trace is hardly seen
3: a light trace is seen
2: a trace is seen
1: a slightly dark trace is seen

**[Table 2 - 1]**

| | | Example 1 | Example 2 | Example 3 | Example 4 | Example 5 |
|---|---|---|---|---|---|---|
| Repellent type | | A | A | A | A | A |
| Fabric type | | polyester | polyester | polyester | nylon | spandex |
| Method to make chalk mark | | friction tester | friction tester | friction tester | friction tester | friction tester |
| Probe diameter (mm) | | 5 | 5 | 5 | 5 | 5 |
| Load (g) | | 3000 | 1500 | 3000 | 3000 | 3000 |
| Number of times of reciprocation (times) | | 0.5 | 0.5 | 50 | 0.5 | 0.5 |
| Chalk mark (luminance ΔL) | n1 | 5.3 | 5.0 | 5.7 | 6.3 | 6.5 |
| | n2 | 5.8 | 4.8 | 5.8 | 6.2 | 6.0 |
| | n3 | 5.5 | 5.5 | 5.4 | 6.8 | 5.9 |
| | Ave | 5.5 | 5.1 | 5.6 | 6.4 | 6.1 |
| | evaluation level | 3.5 | 3.5 | 3.5 | 3.5 | 3.5 |
| Chalk mark (visual observation) | n1 | 3-4 | - | - | 2-3 | 3 |
| | n2 | 3-4 | - | - | 3-4 | 3-4 |
| | n3 | 2-3 | - | - | 3-4 | 2-3 |
| | Ave (evaluation level) | 3-4 | - | - | 3-4 | 3 |

**[Table 2-2]**

| | | Example 6 | Example 7 | Example 8 | Example 9 |
|---|---|---|---|---|---|
| Repellent type | | B | B | C | C |
| Fabric type | | polyester | spandex | polyester | spandex |
| Method to make chalk mark | | friction tester | friction tester | friction tester | friction tester |
| Probe diameter (mm) | | 5 | 5 | 5 | 5 |
| Load (g) | | 3000 | 3000 | 3000 | 3000 |
| Number of times of reciprocation (times) | | 0.5 | 0.5 | 0.5 | 0.5 |
| Chalk mark (luminance ΔL) | n1 | 10.5 | 10.9 | 6.9 | 7.7 |
| | n2 | 10.1 | 10.4 | 7.3 | 7.4 |
| | n3 | 11.3 | 10.7 | 7.5 | 7.5 |
| | Ave | 10.6 | 10.7 | 7.2 | 7.5 |
| | evaluation level | 2 | 2 | 3 | 3 |

**[Table 2-3]**

| | | Example 10 | Example 11 | Example 12 | Example 13 |
|---|---|---|---|---|---|
| Repellent type | | D | D | E | E |
| Fabric type | | polyester | spandex | polyester | spandex |
| Method to make chalk mark | | friction tester | friction tester | friction tester | friction tester |
| Probe diameter (mm) | | 5 | 5 | 5 | 5 |
| Load (g) | | 3000 | 3000 | 3000 | 3000 |
| Number of times of reciprocation (times) | | 0.5 | 0.5 | 0.5 | 0.5 |
| Chalk mark (luminance ΔL) | n1 | 14.8 | 14.5 | 1.4 | 1.7 |
| | n2 | 15.3 | 14.9 | 1.9 | 2.1 |
| | n3 | 14.6 | 14.0 | 1.7 | 1.5 |
| | Ave | 14.9 | 14.5 | 1.7 | 1.8 |
| | evaluation level | 1.5 | 1.5 | 5 | 5 |

Comparative examples 1 to 4 are examples of making a chalk mark with a human nail. Table 3 shows experimental results of Comparative examples 1 to 4. Comparative examples 1, 2 are examples of processes with the repellent A that is the same as that of Experimental examples 1 to 5. Comparative examples 3, 4 are examples of using the repellent B that is the same as that of Experimental examples 6, 7. When making a chalk mark with a human nail, a testing fabric was placed on a flat place, and a surface of the testing fabric was lightly scratched with the nail.

**[Table 3]**

| | | Comparative example 1 | Comparative example 2 | Comparative example 3 | Comparative example 4 |
|---|---|---|---|---|---|
| Repellent type | | A | A | B | B |
| Fabric type | | polyester | spandex | polyester | spandex |
| Method to make chalk mark | | human nail | human nail | human nail | human nail |
| Probe diameter (mm) | | - | - | - | - |
| Load (g) | | - | - | - | - |
| Number of times of reciprocation (times) | | | | | |
| Chalk mark (luminance ΔL) | n1 | 10.6 | 8.2 | 13.5 | 12.0 |
| | n2 | 6.5 | 11.0 | 12.9 | 13.4 |
| | n3 | 7.9 | 5.9 | 10.2 | 13.7 |
| | Ave | 8.3 | 8.4 | 12.2 | 13.0 |
| | evaluation level | 3 | 3 | 2 | 1.5 |
| Chalk mark (visual observation) | n1 | 3 | 2-3 | 2-3 | 2-3 |
| | n2 | 2-3 | 3 | 2 | 2 |
| | n3 | 3-4 | 3 | 2 | 1-2 |
| | Ave (evaluation level) | 3 | 3 | 2 | 2 |

Comparative example 5 is an example of rubbing the surface hundred times with the friction tester used in Experimental example 1. Other conditions are the same as those of Experimental example 1. Table 4 shows an experimental result in the case of Comparative example 5.

**[Table 4]**

| | | Comparative example 5 |
|---|---|---|
| Repellent type | | A |
| Fabric type | | polyester |
| Method to make chalk mark | | friction tester |
| Probe diameter (mm) | | 5 |
| Load (g) | | 3000 |
| Number of times of reciprocation (times) | | 100 |
| Chalk mark (luminance ΔL) | n1 | 9.2 |
| | n2 | 10.2 |
| | n3 | 9.8 |
| | Ave | 9.7 |
| | evaluation level | 2.5 |

Comparative examples 6 to 7 are examples of changing loads in the friction tester used in Experimental example 1. Table 5 shows experimental results of Comparative examples 6 to 7. The load of Comparative example 6 is 50 g. The load of Comparative example 7 is 6000 g. Other conditions are the same as those of Experimental example 1.

**[Table 5]**

| | | Comparative example 6 | Comparative example 7 |
|---|---|---|---|
| Repellent type | | A | A |
| Fabric type | | polyester | polyester |
| Method to make chalk mark | | friction tester | friction tester |
| Probe diameter (mm) | | 5 | 5 |
| Load (g) | | 50 | 6000 |
| Number of times of reciprocation (times) | | 0.5 | 0.5 |
| Chalk mark (luminance ΔL) | n1 | 2.1 | 9.7 |
| | n2 | 5.0 | 9.9 |
| | n3 | 3.8 | 9.5 |
| | Ave | 3.6 | 9.7 |
| | evaluation level | 4 | 2.5 |

### <Effect and supplement>

The embodiments have been described above as exemplifications of the technique disclosed in the present application. However, the technique in the present disclosure is not limited thereto, and the technique is also applicable to embodiments to which changes, replacements, additions, omissions, etc., are appropriately made.

The evaluation method and the evaluation apparatus described in all the claims of the present disclosure are carried out by cooperation with hardware resources, for example, a processor, a memory, and computer programs, etc.

### INDUSTRIAL APPLICABILITY

The evaluation method and the evaluation apparatus of the present disclosure are useful in quantitatively evaluating a surface of a substrate.

The present application claims priority based on Japanese Patent Application No. 2023-187049 filed in Japan dated October 31, 2023, which is incorporated herein by reference in its entirety.

### REFERENCE SIGNS LIST

- 1: evaluation apparatus;
- 11: computing circuit;
- 12: storage;
- 13: communication circuit;
- 14: input apparatus;
- 15: output apparatus;
- 121: data for evaluation;
- 122: image data;
- 123: result data;
- 2: imaging apparatus; and
- 3: coaxial illumination apparatus.

## Claims

1. An evaluation method for evaluating a scratch on a surface of a substrate which is an evaluation target, comprising:
acquiring an image of the surface of the substrate which is the evaluation target;
extracting, from the image, each of a first range with the scratch and a second range with no scratch;
computing a difference between a luminance value of the first range and a luminance value of the second range; and
obtaining an evaluation result based on the difference.

2. The evaluation method according to claim 1, wherein before the acquiring of the image, the scratch is made on the surface of the substrate which is the evaluation target with a friction tester by causing a stylus of the friction tester to reciprocate on the surface of the substrate.

3. The evaluation method according to claim 1, wherein the substrate is a textile.

4. The evaluation method according to claim 3, wherein the scratch is a chalk mark on the textile.

5. The evaluation method according to claim 1, wherein the image is captured by an imaging apparatus in which an optical axis of an irradiation light from a light source irradiated on the substrate is set to the same axis as a photographing axis of a camera.

6. The evaluation method according to claim 2, wherein the friction tester makes the scratch on the evaluation target in a range of a straight line having a width of 10 mm or less.

7. The evaluation method according to claim 2, wherein a number of times of the reciprocation of the stylus is ten times or less.

8. The evaluation method according to claim 2, wherein the friction tester makes the scratch at a predetermined position on the surface of the substrate which is the evaluation target by reciprocating the stylus with a predetermined load.

9. The evaluation method according to claim 8, wherein the predetermined load is in a range of 100 g to 4000 g.

10. The evaluation method according to claim 8, wherein the predetermined load is in a range of 1500 g to 4000 g.

11. An evaluation apparatus including a computing circuit, for evaluating a scratch on a surface of a substrate which is an evaluation target, the evaluation apparatus acquiring an image of the surface of the substrate, wherein the computing circuit
extracts, from the image, each of a first range with the scratch and a second range with no scratch,
computes a difference between a luminance value of the first range and a luminance value of the second range, and
outputs an evaluation result based on the difference.
